Europäisches Patentamt

European Patent Office

Office européen des brevets

(11) Publication number: **0 077 594**
**B1**

(12) **EUROPEAN PATENT SPECIFICATION**

(45) Date of publication of patent specification: **11.09.85**

(21) Application number: **82201298.5**

(22) Date of filing: **19.10.82**

(51) Int. Cl.⁴: **C 09 D 11/10, C 08 F 8/44,**
**C 08 F 212/04, C 08 F 232/08**

(54) **Partially esterified and partially neutralized alkyl succinic anhydride resins and their use in printing inks.**

(30) Priority: **19.10.81 NL 8104733**

(43) Date of publication of application:
**27.04.83 Bulletin 83/17**

(45) Publication of the grant of the patent:
**11.09.85 Bulletin 85/37**

(84) Designated Contracting States:
**BE CH DE FR GB IT LI NL**

(56) References cited:
**FR-A-2 179 764**
**FR-A-2 250 767**
**US-A-3 468 829**

(73) Proprietor: **DSM RESINS BV**
**Ceintuurbaan 5**
**NL-8022 AW Zwolle (NL)**

(72) Inventor: **Runavot, Yves**
**204 Boulevard de Créteil**
**F-94100 St. Maur des Fossés (FR)**
Inventor: **Chasserau, Daniel**
**23 Rue des Beaux-Sites**
**F-95600 Eaubonne (FR)**
Inventor: **Mouynat, Louis-Paul**
**28 Avenue de l'Orangerie**
**F-78170 La Celle Saint-Cloud (FR)**

(74) Representative: **van Leeuwen, Hendrik**
**Bernardus et al**
**Octrooibureau DSM Postbus 9**
**NL-6160 MA Geleen (NL)**

**Description**

The invention relates to a resin suitable for printing inks, which resin is based on the reaction product of a synthetic hydrocarbon resin and and alpha, beta-unsaturated dicarboxylic acid.

Such resins are known from US—A—3 468 829, which discloses resin mixtures of a petroleum resin and rosin reacted with maleic anhydride, during which the rosin reacts preferentially, yielding maleopimaric acid and the like, but no or hardly any alkyl succinic anhydride resin, which compounds are subsequently partially neutralized with a reactive compound of a metal belonging to Group II of the Periodic Table. In Example 6 a reaction is described with a phenol formaldehyde cocondensate.

Furthermore FR—A—2 250 767 discloses resins for printing inks prepared by reacting a hydrocarbon resin based on a $C_5$ cracking cut containing in particular cyclopentadiene and homologues thereof with an unsaturated polycarboxylic acid, e.g. maleic acid (1—50, preferably 10—30% of acid based on hydrocarbon) and subsequent esterification with an alcohol. Various monoalcohols, diols and polyols have been mentioned, some of which contain two or three methylol groups, which alcohols do not however contain a phenolic hydroxyl group. Phenolic resins may be admixed with the modified hydrocarbon resin and also the possibility is mentioned of converting the residual carboxyl groups with metal compounds into metal soap groups.

Finally, FR—A—2 179 764 discloses resins for printing inks which are prepared from a $C_9$ cut based on hydrocarbon resin subsequently reacted with an unsaturated dicarboxylic acid (e.g. maleic anhydride), which is then esterified with an alcohol containing at most two hydroxyl groups and up to 10 carbon atoms. Subsequently the residual carboxyl groups can be saponified with alkaline earth compounds.

It has now been found that resin vehicles for printing inks can be improved as to their properties. More in particular one or more of the following properties could be improved: viscosity in aromatic solvent, better gloss of ink, higher rub resistance and better wetting of pigment, in particular of Rubis lithol dyes. Better gloss and better wetting of pigment are particularly important.

According to the present invention improved resins for printing inks are obtained by partial esterification of an alkyl succinic anhydride resin having an average molecular weight of 800 to 2,000 with a polyhydroxy compound which contains at least 2 methylol groups at least one phenolic hydroxyl group and one $C_4$—$C_{12}$ alkyl group per molecule, and subsequent neutralization of at least part of the residual carboxyl groups with a reactive compound of a metal of Group II of the Periodic Table.

The alkyl succinic anhydride resin is conveniently prepared by reacting maleic anhydride with a resin of the vinyl aromatic type, based on a $C_9$ hydrocarbon cut and which contains, inter alia, styrene, alpha-methyl styrene, vinyltoluene, indene, methyl indenes and minor proportions, below 20%, preferably below 10% by weight, of dicyclopentadiene. The preparation of the hydrocarbon resin usually takes place in the presence of a Friedel Crafts catalyst at a temperature below 100°C.

The hydrocarbonresin is subsequently converted into an alkyl succinic anhydride resin by reacting with maleic anhydride or a homologue thereof; the maleic anhydride is incorporated in an amount of 2—20% by weight, preferably 3—15% by weight. The reaction is carried out in the presence of a free radical catalyst in a hydrocarbon solvent. Mixtures of maleic anhydride and a homologue thereof can also be used.

It is also possible to prepare alkylsuccinic anhydride resins containing the appropriate percentage of carboxylic groups in one step, e.g. by reacting styrene or other vinyl aromatics and maleic anhydride.

The polyhydroxy compound used for partial neutralization of the grafted resin contains at least two methylol groups in the molecule, at least one phenolic hydroxyl group and at least one $C_4$—$C_{12}$ alkyl group. Especially precondensates (resole type) of an alkyl phenol and formaldehyde in a molar ratio of 1—2 moles of formaldehyde per mole of phenol are used. Suitable phenols are alkylphenols (including cycloalkyl phenols) such as butyl phenol, amylphenol, octylphenol, nonylphenol, cumylphenol and the addition product of dicyclopentadiene and phenol. Alkylphenols impart satisfactory solubility and viscosity in organic solvents. Paraisomers are preferred. Mixtures of different alkyl phenols and different isomers can also be used. Instead of formaldehyde, para-formaldehyde, trioxymethylene and also hexamethylene tetramine can be used as a source of formaldehyde.

These precondensates of the resole type are conveniently prepared by condensation reactions of the appropriate quantities of reactants under alkaline conditions at temperatures of 40° to 80°C, preferably 50° to 65°C.

The precondensates as such contain at least two methylol groups per molecule and at least one phenolic hydroxyl group. The precondensates contain between 1 and 4, preferably from 2 to 3 phenol units per molecule on an average.

The amount of polyhydroxy compound used per anhydride group of alkyl succinic anhydride is such that 0.5 to 2 equivalents, preferably 0.75 to 1.5, of methylol groups are reacted per anhydride group, the theoretical result being an esterification reaction yielding an alkyl succinic acid half-ester of the resole. This esterification reaction is normally conducted in 0.5 to 3 hrs at a temperature of 50°—100°C.

The subsequent neutralization of the alkyl succinic half-ester resin of a resole is carried out with a reactive compound of a metal of Group II of the Periodic Table. Suitable compounds are oxides, hydroxides and salts of weak acids. Suitable metals are barium, calcium, zinc and magnesium. Calcium and zinc are preferably used in mixtures. Preferably the metals used belong to Period 4 of the Periodic System.

The amount of reactive neutralization agent used ranges between 0.5 and 1 equivalent per equivalent of

2

residual (i.e. non-esterified) carboxyl group. Water of reaction is removed conveniently by azeotropic distillation with xylene, returning the solvent but removing the water.

The partially esterified, partially neutralized addition product of the alkyl succinic anhydride resin is a resin with the following typical characteristics: softening point 1.75—200°C, preferably between 185°C and 195°C, viscosity of solution 0.5—2.5 dPa.s/50% in toluene at 23°C; acid value 15—20.

The resin is an excellent vehicle for printing inks for gravure and offset techniques. For gravure inks the resin is dissolved in an aliphatic, cyclo-aliphatic, aromatic hydrocarbon solvent or blend thereof having a boiling point of 80° to 130°C and subsequently pigmented and the pigment dispersed by well-known techniques. For offset inks the resin is cooked with a drying alkyd resin or drying oil and mineral oil in order to obtain a varnish, which is then pigmented.

Example 1

100 g of hydrocarbon resin based on a $C_9$ cut (2% styrene, 2% alpha-methylstyrene, 5% dicyclopentadiene, 20% vinyltoluene, 20% indene, 7% methylindene) and having the following characteristic: softening point: 150°—160°C, were dissolved in 25 g of technical xylene in a flask and 6.8 g of maleic anhydride were added together with 1 g of di-tertiary butyl peroxide. The mixture was heated to a temperature of 140°C for 5 hours, after which the alkyl succinic anhydride was cooled to 100°—110°C. This resin showed a softening point of 175°C (B+R), an acid value of 40 and a viscosity in a 50% solution in toluene of 0.06 Pa.s at 23°C. To the resin 200 g of xylene were added and 21 g of a resole type precondensate obtained by reacting 100 g of p.nonylphenol with 48.7 g of aqueous formaldehyde containing 44% of formaldehyde (molar ratio of phenol to formaldehyde 1:1.6).

This precondensate was obtained by condensation at 50°C for 2 hours in the presence of 0.5 g of sodium hydroxide. The solution of the grafted resin and precondensate in technical xylene was heated for 1 hour at 60°—65°C, leading to a partial (presumably) (half) ester, alkyl succinic ester and a resole. Subsequently 7.5 g of calcium hydroxide suspended in 30 g of water were added, leading to the formation of amber-coloured salts of the halfester of alkyl succinic acids. The temperature was then slowly increased to 145°—150°C, during which organic solvent distilling off was returned but water distilling off was removed. Further water was removed by distilling off xylene until the temperature reached 220°C and this operation was completed by applying a vacuum for 1 hour.

The resin thus obtained had a melting point of 186°C and a viscosity in toluene (50%) of 0.23 Pa.s in a yield of 99%.

Example 2

In the apparatus described in Example 1, 500 g of an alkyl succinic anhydride resin were introduced. This resin had been previously prepared by polymerizing a $C_9$ cut (2% of styrene, 2% of alpha methylstyrene, 15% of dicyclopentadiene, 20% of vinyltoluene, 20% of indene and 7% of methylindene) in the presence of borontrifluoride so as to obtain a resin with a molecular weight of 1400 and subsequent reaction with 5% of maleic anhydride to obtain the alkyl succinic anhydride, which had a softening point of 166°C (B+R), an acid value of 21 and a viscosity at 23°C of 0.06 Pa.s in a 50% solution in toluene.

To the resin, 200 g of xylene were added and 25 g of a precondensate of octylphenol (containing 1 mole of para-octylphenol and 1.6 moles of formaldehyde). The solution of the two resins was heated to 60°—65°C for 1 hour and 9.2 g of calcium hydroxide suspended in 40 g of water were added. After removal of the water distilled off and subsequent removal of the solvent, an amber-coloured resin with a softening point of 188°C and a viscosity of 0.51 Pa.s in a 50% solution in toluene was obtained in a yield of 99%.

Example 3

Into the apparatus described in Example 1, 500 g of a resin based on a $C_9$ steam cracking cut (2% of styrene, 2% of alpha methylstyrene, 10% of dicyclopentadiene, 20% of vinyltoluene, 20% of indene and 7% of methylindene), which was treated with 6.8% of maleic anhydride, were introduced. This resin had a softening point of 178°C and a viscosity of 0.06 Pa.s at 23°C in a 50% solution in toluene.

To the resin 200 g of xylene were added and 50 g of a precondensate of p-tertiary butylphenol and formaldehyde prepared by condensing 2160 g of p-tertiary butyl phenol containing about 10% of the ortho-isomer and 1530 g of formaldehyde with 50 g of sodium hydroxide. Subsequently 5 g of calcium hydroxide and 2.2 g of zinc oxide were added and heated. Water and subsequently solvent were removed and an amber-coloured resin with a softening point of 195°C and a viscosity of 0.37 Pa.s at 23°C in a 50% solution in toluene was obtained in a yield of 97%.

Example 4

500 g of alkyl succinic anhydride resin as described in Example 1 were dissolved in 125 g of technical xylene. The solution was heated to 100—110°C and there were introduced 40 g (8%) of a cocondensate which had previously been prepared by condensation of 240 g of p.amyl phenol with 156 g of aqueous formaldehyde (44%) in the presence of sodium hydroxide as a catalyst. The temperature was subsequently raised to 120°C and the mixture was kept at that temperature for one hour. Then 35 g of calcium hydroxide, suspended in xylene, were added and the temperature was raised to 145—150°C. Xylene was distilled off and recycled and the water resulting from esterification and neutralization was collected. The temperature was then raised in three hours to 220°C and kept at that value until the solution had become clear, after which the process was completed at reduced pressure for 30 minutes.

The resin thus obtained had a dark brown colour, a melting point of 191°C, and a viscosity of 10.6 Pa.s at 23°C in a 50% solution in toluene. The yield was 98.5%.

Example 5

A varnish for a gravure ink was prepared by dissolving 38 parts of resin according to Ex. 1 in 62 parts by weight of hydrocarbon consisting of a blend of 20% of toluene and 80% of aliphatic hydrocarbon of b.p. 90°—115°C, giving a solution with a viscosity of 40 seconds in a Ford cup 2.5 at 23°C.

The grinding of the ink was effected with 32.5 parts of varnish with 7.5 parts of Rubis lithol and 5 parts of toluene. Subsequently 37 parts of varnish were added and 13 parts of the solvent blend mentioned above. The pigment wetted easily. To the ink base thus prepared 50 ml of solvent blend were added per 100 g of ink base in order to prepare the final ink.

The ink had a 2.5 Ford cup viscosity of 40 seconds at 23°C. (French norm: NF—T 30—014).

The ink thus obtained does not flocculate, even if 300 ml of solvent blend in 100 g of ink are added, indicating an excellent wetting property. Also the rub resistance was excellent and superior to that of inks prepared from polymerised resinates. Also the gloss and colour intensity were at least equal to that of inks based on calcium resinate. The properties are tabulated in Table I.

TABLE I

|  | | Resin acc. to Ex. 5 |
|---|---|---|
| Flocculation limit (based on 100 g of resin with the solvent indicated above) | about 150 ml | above 300 ml |
| Colour intensity 30<br>20 | 1.58<br>1.30 | 1.62<br>1.34 |
| Brilliance | 54 | 56 |
| Rub resistance Number of turns with Taber abrasimeter | 10 | 35 |

Example 6
Rotative offset ink

A varnish was prepared from 47 parts of resin according to Ex. 2 and 53 parts of a mineral oil with b.p. 240°—270°C, aniline point 72, content of aromatics abt. 15% and a flash point above 100°C. Subsequently the varnish was pigmented in a roller mill according to the table below

|  | red ink | blue ink | yellow ink |
|---|---|---|---|
| Rubis lithol | 14 | — | — |
| Phthalocyanine blue | — | 12.5 | — |
| Benzidine yellow | — | — | 10 |
| Alkyd resin (Uralac* S41N) ex Sheby, Bezons, France | 8 | 7 | 6 |
| Varnish prepared (as described above) | 70 | 74.5 | 81 |
| Mineral oil (ditto) | 8 | 6 | 3 |

* Uralac is a vinyl toluene modified alkyd, based on a blend of non-yellowing oils, esterified with glycerol (AV5—8, Colour Gardner 8, viscosity 25% Gardner Holt Z10, flash point 66°C).

The inks showed a viscosity of abt. 100 d Pa.s, determined with a Laray viscosimeter at 23°C; the tack values were low and the gloss was excellent. The properties of the inks obtained and of a commercially available ink (based on an abietoformophenolic resin) are tabulated in Table II.

# 0 077 594

## TABLE II

| | Red Ex. 5 | Comparison | Blue Ex. 5 | Comparison | Yellow Ex. 5 | Comparison |
|---|---|---|---|---|---|---|
| Gloss (% reflection at 60° angle (Ericson glossmaster) | 58 | 47 | 38 | 39 | 62 | 60 |
| Offsetting time (sec.) | 60 | 90 | 30 | 100 | 30 | 50 |
| Tack (Twing Albert) V1 | 13.6 | 18.2 | 12.1 | 15.6 | 14.0 | 19.2 |
| V2 | 17.4 | 22.4 | 15.2 | 19.2 | 17.9 | 23.0 |
| V3 | 20.8 | 27.9 | 17.3 | 24.7 | 21.2 | 28.4 |
| Rub resistance (number of turns with Taber abrasimeter) | 30 | 15 | 25 | 10 | 35 | 25 |

Experiments run on IGT (Institut Grafische Techniek TNO—Amsterdam) equipment, using coated paper, Maine, weight 90 g/m$^2$, depositing 1 g of ink per m$^2$.

## Claims

1. Process for preparing a resin suitable for printing inks comprising partial esterification of an alkyl succinic anhydride resin with an average molecular weight of 800—2,000 with a polyhydroxy compound containing at least two methylol groups per molecule, at least one phenolic hydroxyl group and one $C_4$—$C_{12}$-alkyl group and subsequent neutralization of at least part of the residual carboxyl groups with an oxide, hydroxyde or weak acid salt of a metal of Group II of the Periodic Table.

2. Process according to claim 1, in which the alkyl succinic anhydride resin is the addition product of maleic anhydride and a hydrocarbon resin substantially based on vinyl aromatic compounds.

3. Process according to claim 1 or 2, in which the polyhydroxy compound is a resole type reaction product of formaldehyde and an alkyl phenol.

4. Process according to claim 3, in which the phenol is a para-$C_4$—$C_{12}$ monoalkylphenol.

5. Process according to claim 1, in which 0.5 to 2 equivalents of polyhydroxy compound are reacted per equivalent of anhydride group.

6. Process according to claim 1, in which the Group II metal is a metal of Period 4.

7. Process according to claim 1, in which the amount of hydroxide/oxide per residual carboxylic group is from 0.5—1:1.

8. Resin useful for printing inks, comprising an alkyl succinic acid which is partially esterified with a polyhydroxy compound containing at least two methylol groups per molecule, at least one phenolic hydroxyl group and one $C_4$—$C_{12}$-alkyl group and partially neutralized with a hydroxide/oxide of a Group II metal the base alkyl succinic resin having an average molecular weight of 800—2000.

9. Printing ink composition for gravure, comprising a resin vehicle as defined in claim 8, a hydrocarbon solvent with a boiling point of 80°—130°C and a pigment.

10. Printing ink composition for offset, comprising the resin of claim 8, an oil varnish made by cooking this resin with a drying oil or alkyd, a mineral oil and a pigment.

## Patentansprüche

1. Verfahren zur Herstellung eines für Druckfarben geeigneten Harzes gekennzeichnet durch partielle Veresterung eines Alkylbernsteinsäureanhydrid-Harzes mit einem durchschnittlichen Molekulargewicht von 800—2000 mit einer Polyhydroxyverbindung, welche mindestens zwei Methylolgruppen je Molekül, mindestens eine phenolische Hydroxylgruppe und eine $C_4$—$C_{12}$-Alkylgruppe enthält, und anschliessende Neutralisation mindestens eines Teiles der restlichen Carboxylgruppen mit einem Oxid, Hydroxid oder Salz einer schwachen Säure eines Metalls der Gruppe II des Periodensystems.

2. Verfahren nach Anspruch 1, dadurch gekennzeichnet, daß als Alkylbernsteinsäureanhydrid-Harz das Additionsprodukt von Maleinsäureanhydrid und einem im wesentlichen auf vinylaromatischen Verbindungen basierenden Kohlenwasserstoffharz eingesetzt wird.

3. Verfahren nach Anspruch 1 oder 2, dadurch gekennzeichnet, daß als Polyhydroxyverbindung ein Reaktionsprodukt vom Resoltyp von Formaldehyd und einem Alkylphenol eingesetzt wird.

4. Verfahren nach Anspruch 3, dadurch gekennzeichnet, daß das Phenol ein p-$C_4$—$C_{12}$-Monoalkylphenol ist.

5

**0 077 594**

5. Verfahren nach Anspruch 1, dadurch gekennzeichnet, daß 0,5 bis 2 Äquivalente Polyhydroxyverbindung je Äquivalent Anhydridgruppen umgesetzt werden.

6. Verfahren nach Anspruch 1, dadurch gekennzeichnet, daß das Metall der Gruppe II ein Metall der Periode 4 ist.

7. Verfahren nach Anspruch 1, dadurch gekennzeichnet, daß die Menge an Hydroxid/Oxid je restliche Carboxylgruppe 0,5—1:1 beträgt.

8. Für Druckfarben brauchbares Harz, umfassend eine Alkylbernsteinsäure, welche mit einer Polyhydroxyverbindung, enthaltend mindestens zwei Methylolgruppen je Molekül, mindestens eine phenolische Hydroxylgruppe und eine $C_4$—$C_{12}$-Alkylgruppe, partiell verestert und mit einem Hydroxid/Oxid eines Metalls der Gruppe II partiell neutralisiert ist, wobei das Alkylbernsteinsäure-Grundharz ein durchschnittliches Molekulargewicht von 800—2000 hat.

9. Drucktintenzusammensetzung für Tiefdruck, umfassend einen Harzträger wie in Anspruch 8 definiert, ein Kohlenwasserstofflösungsmittel mit einem Siedepunkt von 80—130°C und ein Pigment.

10. Drucktintenzusammensetzung für Offsetdruck, umfassend das Harz von Anspruch 8, einen Öllack, hergestellt durch Kochen dieses Harzes mit einem trocknenden Öl oder Alkyd, ein Mineralöl und ein Pigment.

**Revendications**

1. Procédé de préparation d'une résine convenant pour encres d'imprimerie, comprenant une estérification partielle d'une résine d'anhydride alkyl-succinique ayant un poids moléculaire moyen de 800 à 2000 avec un composé polyhydroxylique renfermant au moins deux groupes méthylol par molécule, au moins un groupe hydroxyphénolique et un radical alkyle en $C_4$—$C_{12}$ et la neutralisation ultérieure d'une partie au moins des groupes carboxyliques résiduels avec un oxyde, un hydroxyde ou un sel d'acide faible d'un métal du groupe II de la Classification Périodique.

2. Procédé selon la revendication 1, dans lequel la résine d'anhydride alkyl-succinique est le produit d'addition d'anhydride maléique et d'une résine hydrocarbonée sensiblement à base de composés vinyliques aromatiques.

3. Procédé selon la revendication 1 ou 2, dans lequel le composé polyhydroxylique est un produit de réaction du type résole, de formaldéhyde et d'un alkylphénol.

4. Procédé selon la revendication 3, dans lequel le phénol est un p-monoalkyl($C_4$—$C_{12}$)phénol.

5. Procédé selon la revendication 1, dans lequel on fait réagir 0,5 à 2 équivalents du composé polyhydroxylique par équivalent du groupe anhydride.

6. Procédé selon la revendication 1, dans lequel le métal du Groupe II est un métal de la Période 4.

7. Procédé selon la revendication 1, dans lequel la quantité d'hydroxyde/oxyde par groupe carboxylique résiduel est de 0,5—1:1.

8. Résine qui convient pour les encres d'imprimerie, comprenant un acide alkyl-succinique qui est partiellement estérifié avec un composé polyhydroxylique contenant au moins deux groupes méthylol par molécule, au moins un groupe hydroxyphénolique et un radical alkyle en $C_4$—$C_{12}$ et partiellement neutralisé avec un hydroxyde/oxyde d'un métal du Groupe II, la résine alkyl-succinique de base ayant un poids moléculaire moyen de 800 à 2000.

9. Composition d'encre d'imprimerie pour gravure, comprenant un véhicule résineux tel que défini dans la revendication 8, un solvant hydrocarboné ayant un point d'ébullition de 80 à 130°C et un pigment.

10. Composition d'encre d'imprimerie pour offset, comprenant la résine de la revendication 8, un vernis huileux qu'on prépare en cuisant cette résine avec une huile siccative ou alkyde, une huile minérale et un pigment.